# EUROPEAN PATENT APPLICATION

(11) **EP 4 656 035 A1**
(43) Date of publication of application: **03.12.2025**
(21) Application number: 24209254.2
(22) Date of filing: 28.10.2024
(51) Int. Cl.: A01G 18/70

(54) **MACHINE-LEARNING ENABLED FUNGICULTURE THINNING**

(30) Priority: 29.05.2024 US 202463652955 P
(71) Applicant: 4AG ROBOTICS INC., Salmon Arm, BC V1E 1E6 (CA)
(72) Inventor: MANKOWSKI, Peter, Vernon, BC, V1H 2C2 (CA); JAYASHREE, Vijaya Sankar Velayudham, Salmon Arm, BC, V1E 1H7 (CA); TOMLINSON, Nathan, Enderby, V0E 1V1 (CA); RAO, Prashanth Haleyur Narayana, Salmon Arm, BC, V1E 2R3 (CA)
(74) Representative: Michalski Hüttermann & Partner Patentanwälte mbB

(57) **Abstract**

A robotic mushroom crop manager (100) periodically or continuously receives mushroom bed data corresponding to a mushroom bed including growing mushrooms (410) at a plurality of times, and uses a trained mushroom bed model (260) to process the mushroom bed data to generate mushroom bed state vectors respectively characterizing corresponding states of the mushroom bed (400). Control crop management equipment (300) is used to perform a crop management program (262) comprising a sequence of actions on the mushroom bed (400), the sequence of actions including culling actions on at least some of mushrooms determined for culling based on the mushroom bed state vectors. A trained mushroom thinning model determines mushrooms for culling based on the mushroom bed state vectors, and/or mushrooms are determined for culling when a stem-cap growth rate ratio exceeds a preconfigured threshold. An end effector (350) for culling mushrooms has a minimum probe height-width ratio to able culling without contacting or damaging neighbouring mushrooms.

## Description

### FIELD

The present disclosure relates generally to techniques for the cultivation and harvest of agricultural crops, and in particular for the automated cultivation and harvest of mushrooms.

### BACKGROUND

In typical commercial mushroom growing operations, mushrooms are grown in growing beds on the surface of casing soil over substrate in a series of weekly intervals called flushes. Each flush is picked several times per day over a five-day period, and typically two to three flushes are harvested. The size at which the mushrooms are picked depends on market requirements.

European and North American commercial production of button mushrooms typically occurs on "Dutch Style" substrate filled shelves, using a two or three flush cropping cycle. The substrate is typically a composted mixture of wheat straw, animal manure, and gypsum. The substrate is pasteurized, inoculated, and colonized with spawn of a selected mushroom strain. The substrate is covered with a casing soil of peat and lime mixture in a layer approximately 45 to 50 mm deep, which is then ruffled with compost added to the casing to mix mushroom mycelium into the casing.

Traditionally, commercial mushroom farm operations rely on manual labour to harvest the mushrooms. Manual labour is costly, however, and difficult to optimize. Mushrooms typically grow at such a rate that the mushrooms approximately double in size every 24 hours. Using manual labour, each flush is picked only two or three times per day for the duration of the flush, meaning that a mushroom bed may become overgrown between pickings due to the growth rate of mushrooms.

In particular, it is often the case that following initial seeding or later reseeding, the developing mushrooms in a bed are not evenly distributed, but instead form in clumps or clusters, where some areas of the bed have a substantially higher density of mushrooms compared to other areas of the bed. Such high density can negatively impact the growth and ultimate quality of at least some of the mushrooms, thereby decreasing productive yield.

The automated mushroom harvesting apparatus and system by Bourdeau et al. disclosed in WIPO International Publication Number WO 2023/010198A1, the entirety of which is incorporated herein by reference, solves many of the challenges associated with the automated picking of cultivated mushrooms.

The machine-learning virtualization-enabled harvesting technique by Mankowski et al. described in United States Provisional Patent Application No. 63/594,171 filed on October 30, 2023, the entirety of which is incorporated herein by reference, also solves many of the challenges described above. A harvesting program system iteratively generates current harvesting programs for performance by harvesting equipment on a mushroom bed. The system receives current mushroom bed data corresponding to the mushroom bed including growing mushrooms at the current times. The system processes the current mushroom bed data using a mushroom bed model to generate current virtual mushroom beds corresponding to current states of the mushroom bed at the current times. The mushroom bed model is trained using labelled training mushroom bed data including known values of the mushroom bed, and using previously-generated virtual mushroom beds corresponding to predicted states of the mushroom bed. The system generates using the mushroom bed model predicted virtual mushroom beds corresponding to predicted states of the mushroom bed at future times. The system generates current harvesting programs based on the predicted virtual mushroom beds, and transmits them performance by the harvesting equipment on the mushroom bed.

There remains, however, a need for improved techniques to optimize the total yield and overall effectiveness of automated mushroom cultivation and harvest systems which addresses at least some of the shortcomings of previous solutions and provides yet further advantages, thereby providing a material value over prior techniques.

### BRIEF DESCRIPTION OF THE DRAWINGS

Embodiments will now be described, by way of example only, with reference to the attached Figures.
FIG. 1 is a block diagram of a robotic mushroom crop manager.
FIG. 2 is a figurative drawing of a mushroom bed.
FIG's 3 & 4 show perspective views of one non-limiting embodiment of crop management equipment.
FIG. 5 is an image of an actual mushroom bed with growing mushrooms in real growth medium.
FIG. 6 is an image of a synthetic mushroom bed with synthetic mushrooms.
FIG. 7 is an infrared image of an actual mushroom bed with growing mushrooms in real growth medium.
FIG. 8 is the image of FIG. 7 superimposed with bounding boxes illustrating mushroom identification and culling determination metrics.
FIG's 9A-9D respectively show overside perspective, underside perspective, side elevation, and side elevation cross-section views of an end effector for performing mushroom culling actions on a mushroom bed.
FIG. 10 is a flowchart of a method performable by the mushroom crop manager of FIG. 1.

It is to be understood that the accompanying drawings are used for illustrating the principles of the embodiments and exemplifications of the subject-matter discussed herein. Hence the drawings are illustrated for simplicity and clarity, and not necessarily drawn to scale and are not intended to be limiting in scope. Reference characters/numbers are used to depict the elements of the subject-matter discussed that are also shown in the drawings. The same reference characters/numbers are given to a corresponding component or components of the same or similar nature, which may be depicted in multiple drawings for clarity. In particular, specific embodiments or categories of embodiments of an element designated by a particular reference character may be distinguished by means of a suffix, wherein the specific embodiment designated by a reference character having a suffix is a species of the more general element having the same reference character lacking the suffix. For example, an element shown in the drawings and designated by the reference character ###n is a species of the more general element designated by reference character ###, and thus possesses all of the features of the more general element. Text may also be included in the drawings to further clarify certain principles or elements of the invention. It should be noted that features depicted by one drawing may be used in conjunction with or within other drawings or substitute features of other drawings. It should further be noted that common and well-understood elements for creating a commercially viable version of the embodiments discussed herein are often not depicted to facilitate a better view of the principles and elements of the subject-matter discussed herein. Throughout the drawings, sometimes only one or fewer than all of the instances of an element visible in the view are designated by a lead line and reference character, for the sake only of simplicity and to avoid clutter. It will be understood, however, that in such cases, in accordance with the corresponding description, that all other instances are likewise designated and encompassed by the corresponding description.

### DESCRIPTION

Improved techniques for automated cultivation of mushrooms are disclosed herein. More particularly, improved techniques for automated thinning of mushroom beds are disclosed herein. The techniques include a robotic mushroom crop manager using a trained machine-learning-based model to identify mushrooms for culling in order to optimize productivity of the mushroom bed. The robotic mushroom crop manager may also select mushrooms for culling based on growth metrics such as, for example, a rate of growth of the stem of the mushroom as compared to a rate of growth of the cap of the mushroom. The robotic mushroom crop manager may employ specific tools for harvesting marketable mushrooms and other specific tools for culling non-marketable mushrooms. In particular, the robotic mushroom crop manager may employ a suction-cup type robotic end effector which is sufficiently long and narrow to access non-marketable mushrooms crowded by marketable mushrooms in the mushroom bed without disturbing or damaging the marketable mushrooms, or while reducing or minimizing such disturbance or damage.

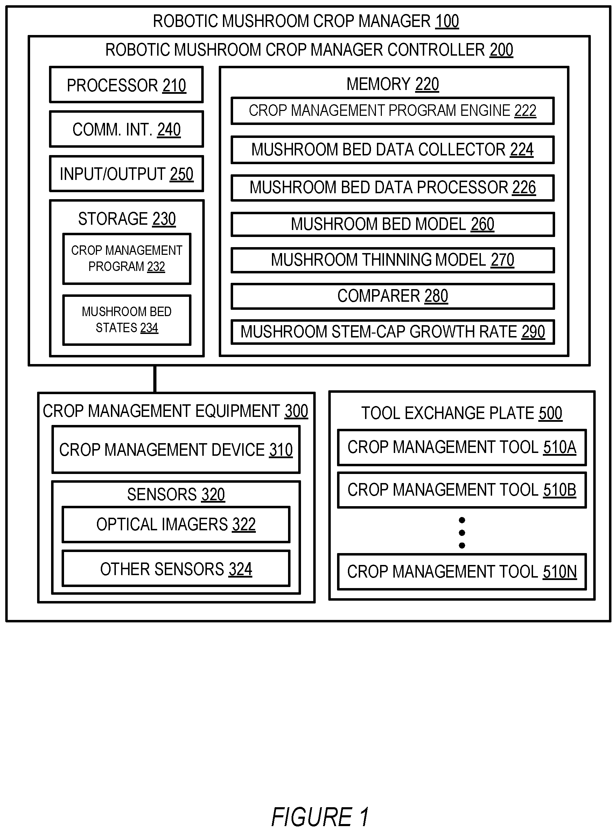

With reference to FIG. 1, a robotic mushroom crop manager 100 may have a robotic mushroom crop manager controller 200, and crop management equipment 300. The robotic mushroom crop manager 100 may have or be operative to cooperate with a tool exchange plate 500 including a plurality of crop management tools 510A,510B... 510N. The robotic mushroom crop manager 100 and the tool exchange plate 500 may be, include, or be a similar to or a modification of, embodiments of a mushroom harvesting robot and tool change station, respectively, as described and shown in WIPO International Publication Number WO 2023/010198 A1, the entirety of which is incorporated herein by reference, or in United States Provisional Patent Application No. 63/551,215, the entirety of which is incorporated herein by reference.

The robotic mushroom crop manager controller 200 may be operative to control the crop management equipment 300 to perform a crop management program. The robotic mushroom crop manager controller 200 may have a processor 210, a memory 220, a storage 230, a communications interface 240, and input/output equipment 250. The memory 220 may store instructions operable by the processor 210 using the storage 230, the communications interface 240, and the input/output equipment 250 to perform the functions described herein. In particular, the memory 220 may store a crop management program engine 222 and a mushroom bed data collector 224. The memory 220 may also store a mushroom bed data processor 226. The robotic mushroom crop manager controller 200 may interface with the crop management equipment 300 in order to communicate with and to control the crop management equipment 300 as described herein.

The crop management equipment 300 may have at least one crop management device 310 and sensors 320. The sensors 320 may include optical imagers 322 (intended to encompass either a single optical imager or a plurality of optical imagers as required by context), and may also include other sensors 324 (likewise). The robotic mushroom crop manager controller 200 is operable to use the crop management program engine 222 to control the crop management equipment 300 to use the crop management device 310 to perform a crop management program 232, which may be stored in the storage 230. At the same time, the robotic mushroom crop manager controller 200 is operable to use the mushroom bed data collector 224 to use the sensors 320 to collect mushroom bed data, as described herein.

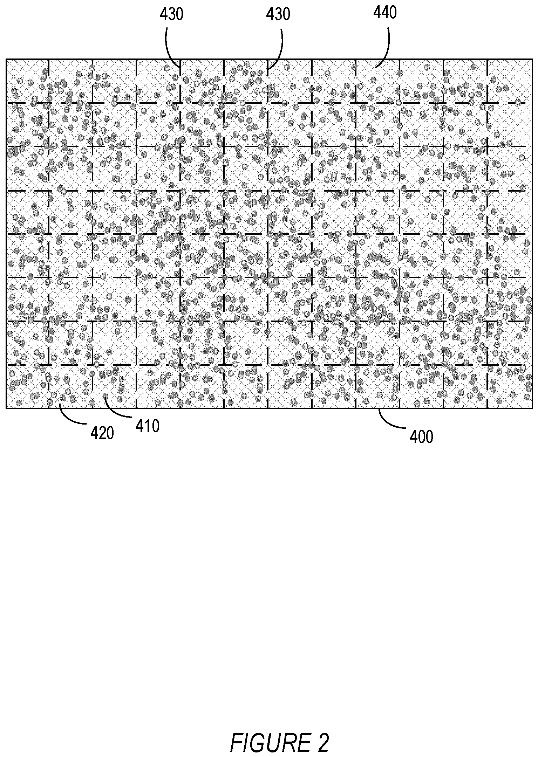

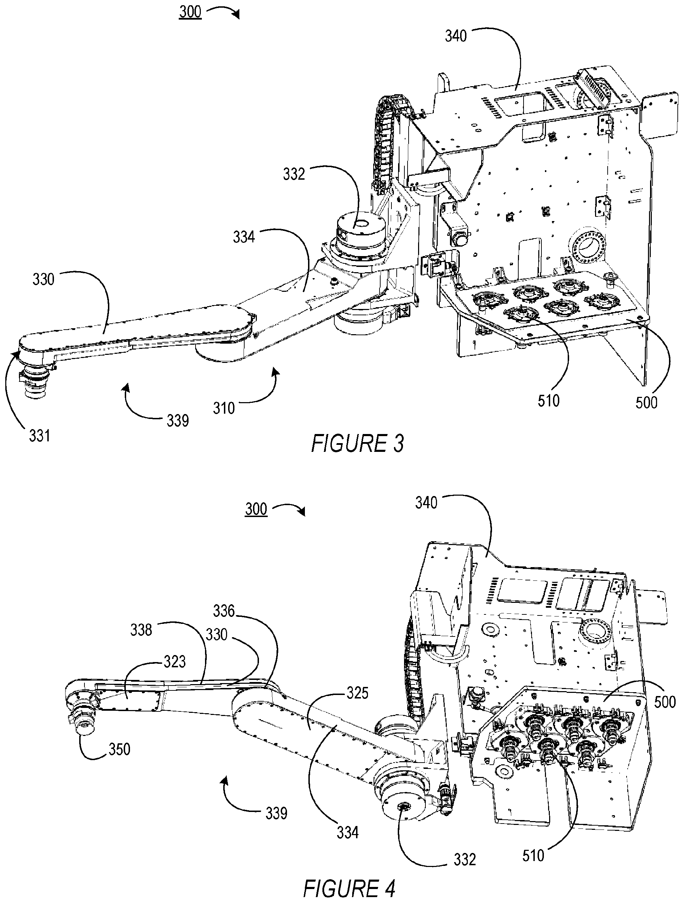

With reference to FIG. 2, the processor 210 is operative to use the crop management program engine 222 to control the crop management equipment 300 to perform the crop management program 232 relative to a mushroom bed 400 containing a number of mushrooms 410 (only one of which is identified by a reference character and lead line to avoid clutter) in a growing medium 420. The growing medium 420 may be of any suitable form or composition. For example, the growing medium 420 may include a casing soil, which may include a peat and lime mixture, layered atop a substrate, which may include a composted mixture of wheat straw, animal manure, and gypsum, which is pasteurized, inoculated, and colonized with spawn of a selected mushroom strain. The crop management program 232 may include a sequence of actions to be performed by the crop management equipment 300, including actions to be performed by the crop management device 310. Without limitation, such actions may include: moving the crop management equipment 300 to or above any location on the mushroom bed 400; using the crop management device 310 to harvest a specific mushroom 410 at a particular location in the mushroom bed 400; using the crop management device 310 to cull a specific mushroom 410 at a particular location in the mushroom bed 400; and using the crop management device 310 to move or otherwise disturb the growing medium 420 at a particular location in the mushroom bed 400.

In particular, the processor 210 may generate and operate a mushroom bed model 260 of the mushroom bed 400, and to perform the crop management program 232 based at least partly on the mushroom bed model 260. The crop management program engine 222 may further be operable, for a given one of the sequence of actions in the crop management program 232, and for a given state of the mushroom bed 400 according to the mushroom bed model 260, to select one of the crop management tools 510A,510B... 510N for performance of that action by the crop management device 310. The processor 210 may further generate and operate a mushroom thinning model 270, and to perform the crop management program 232 based on at least partly on the mushroom thinning model 270. In particular, the processor 210 may perform the crop management program 232 including culling specific mushrooms 410 based on the output of the mushroom thinning model 270.

One non-limiting embodiment of crop management equipment 300 is shown in FIG's 3 & 4. The crop management device 310 comprises a robotic arm 330 operatively mounted to a carriage assembly 340. The robotic arm 330 comprises a shoulder 332, an upper arm 334 pivotally mounted to the shoulder 332, an elbow 336, and a forearm 338 pivotally mounted to the upper arm 334 at the elbow 336. An end effector 350 is releasably mounted to the free end 331 of forearm 338.

The sensors 320 may be mounted to or proximal the crop management device 310 of the crop management equipment 300 so as to be operable to sense the mushroom bed 400 at or about the current position of the crop management device 310. In particular, at least some of the optical imagers 322, which may be digital cameras, may be coupled to the crop management equipment 300 adjacent or proximal the crop management device 310 in such a way as to provide a field of view containing the crop management device 310 and an area of the mushroom bed 400 in which the crop management device 310 is operable to harvest or cull mushrooms 410 in the field of view. For example, one of the optical imagers 322 may be an overhead imager, covered by a transparent overhead imager shield 323, mounted at an underside 339 of the forearm 338, which may be proximal the end effector 350 relative to the elbow 336. In this way, a field of view of the overhead imager, which may be a plan or overhead view, may contain a portion of the mushroom bed 400 beneath the end effector 350 in use, and may also contain at least a portion of the end effector 350 itself. Another one of the optical imagers 322 may be a side imager, covered by a transparent side imager shield 325, mounted to the robotic arm 330 or the carriage assembly 340 and positioned, oriented, and configured in such a way as to provide an elevation, side, or perspective view of the portion of the end effector 350 and portion of the mushroom bed 400 beneath the end effector 350 when in use, which field of view may correspond to the field of view of the overhead imager, in that they are directed to a common object viewed from different angles. For example, the side imager may be mounted at an underside of the 339 of the forearm 338, but now proximal the elbow 336 relative to the end effector 350, and aimed toward the end effector 350. Alternatively, the side imager may be mounted at an underside of the upper arm 334, the shoulder 332, or to the carriage assembly 340, and positioned, oriented, and configured to provide the field of view described herein.

As noted above, the sensors 320 may include other sensors 324, which may or may not be limited by field of view in this way. The other sensors 324 may include one or more of an air temperature sensor, an air humidity sensor, a motion sensor, an orientation sensor, a light sensor, a soil pH sensor, a soil moisture sensor, a soil temperature sensor, a soil nutrient sensor, a soil pest/insect sensor, and a soil pollution sensor. Any one or more of the other sensors 324 may be positioned or mounted at the robotic arm 330, which may also be at an underside of the robotic arm 330

The mushroom bed data collector 224 may be operable by the processor 210 to collect using the sensors 320 a stream of data about the state and conditions of the mushroom bed 400 including the growing mushrooms 410 and optionally also the growing medium 420 (collectively, "mushroom bed data"). In particular, the mushroom bed data collector 224 may use the optical imagers 322 to collect a continuous stream of images of the mushroom bed 400 in the field of view of the optical imagers 322. The optical imagers 322 may be operated to continuously or periodically collect images as the crop management device 310 is moved from position to position above the mushroom bed 400 while performing the crop management program 232. The mushroom bed data collector 224 may be further operable to continuously or periodically collect using the other sensors 324, when provided, a stream of data about the state and conditions of the mushroom bed 400 corresponding to the nature of such other sensors 324.

In particular, the mushroom bed data may include, quantify, or enable determination of one or more properties or characteristics of the mushroom bed 400, the growing mushrooms 410, and optionally the growing medium 420. A non-limiting list of such properties or characteristics of the mushrooms 410 may include: size, including any dimensions of the cap, including cap width, and any dimensions of the stem, including stem length; shape; density; defects; marks; quality grade; anomalies; surface texture; underside spacing between cap and growing medium; and stem orientation. When included, a non-limiting list of the properties or characteristics of the growing medium 420 may include: pH, moisture, temperature, nutrient quantities, pest/insect quantities, and pollution quantities. The mushroom bed data may be position-aware, in that it is associated with (which may be in the form of metadata) a collection location on the mushroom bed 400 where the mushroom bed data was collected by the sensors 320. For example, the mushroom bed data may be indexed according to a virtual partitioning of the mushroom bed 400. For example, as shown in FIG. 2, the mushroom bed 400 may be divided by a set of gridlines 430 into a set of mushroom bed cells 440, sometimes called 'sliding windows', and the mushroom bed data may be collected and indexed in accordance with the mushroom bed cells 440. Such mushroom bed cells 440 may have any appropriate size, shape, or dimensions. In some embodiments, the mushroom bed cells 440 are squares having a side dimension of from about 0.5" to about 5", or at least about 1", or about 1", although other dimensions are possible and contemplated. Any suitable alternative arrangement may be used, including for example, a hexagonal tiling arrangement. The mushroom bed data may also be time-aware, in that it is associated with (which may be in the form of metadata) a collection time at which the mushroom bed data was collected by the sensors 320. For example, when the mushroom bed data is or includes images of the mushroom bed 400, the images may be indexed, labelled, or otherwise associated with a location on the mushroom bed 400 where the image was collected by the optical imagers 322, and may also be indexed, labelled, or otherwise associated with a time at which the image was collected by the optical imagers 322. The position and/or the time may be generated by the crop management equipment 300 itself and received by the robotic mushroom crop manager controller 200, or it may be generated by the robotic mushroom crop manager controller 200.

The sensors 320 may be operable to collect mushroom bed data in any desired time interval. For example, the sensors 320 may be operated to collect mushroom bed data every 1-1000 ms, although other time intervals are contemplated. The mushroom bed data collector 224 may receive raw mushroom bed data from sensors 320 using any communicative connection between the robotic mushroom crop manager controller 200 and the crop management equipment 300. The connection may be a wired connection, a wireless connection, and may use the communications interface 240 to receive the raw mushroom bed data. The raw mushroom bed data may then be stored in the storage 230. The processor 210 may operate the mushroom bed data processor 226 as part of a computer vision system to process the raw mushroom bed data into pre-processed mushroom bed data, which may also be stored in the storage 230. For example, the mushroom bed data processor 226 may be operable to process images collected by the optical imagers 322 to augment, enhance, colour-correct, convert, or compress such images, or to identify, parameterize, or otherwise any of the properties and characteristics described above.

The processor 210 may also be operable to train and operate a mushroom bed model 260 of the mushroom bed 400 based on the mushroom bed data. In particular, the transformed mushroom bed data generated by the mushroom bed data processor 226 may include mushroom bed data vectors configured for ingestion by the mushroom bed model 260. The mushroom bed data vectors may include or enable determination of any quantifiable properties or characteristics of the mushroom bed 400, mushrooms 410, and optionally the growing medium 420, as described herein. When the mushroom bed data is or includes a stream of images, including position-indexed and time-indexed images, as described herein, the mushroom bed data vectors may be or include the images in any suitable encoding, which may include or be labelled by, which may be by metadata, corresponding locations and times. Any suitable object-detection techniques or metrics may be used, which may include intersection-over-union similarity measures. For example, one non-limiting mushroom bed data vector includes any combination of at least some, or all, of the following attributes: time stamp; mushroom bed cell index (e.g. row and column indices); window size; light configuration (e.g. RGB values); distance/depth (which may be in combination with light configuration as RGB-D values); motion quantities (which may be speed, velocity, inertia values of camera, sensors, or related structure); environmental data (such as moisture, temperature, surface substrate quality; substrate grade); and metrics of mushrooms in window (such as size, density, number of high density clumps, proportion of high quality mushrooms). Other quantities and measures are possible and contemplated.

As discussed above, the mushroom bed data may enable a determination of properties or characteristics of the mushrooms 410 including without limitation: size, including any dimensions of the cap, including cap width, and any dimensions of the stem, including stem length; shape; density; defects; marks; quality grade; anomalies; surface texture; underside spacing between cap and growing medium; and stem orientation. When the collected mushroom bed data is or includes a stream of images, as described herein, the mushroom bed model 260 may be trained to generate and predict such properties or characteristics, as described further below.

Specifically, the processor 210 may be operable to train the mushroom bed model 260 by using a comparer 280. In an initial training stage, the mushroom bed data processor 226 may be used to generate mushroom bed data vectors based on mushroom bed data received as described herein, where the corresponding known mushroom bed state vectors encoding the properties and characteristics of the mushroom bed 400, including the mushrooms 410, and optionally the growth medium 420 are determined by an additional procedure.

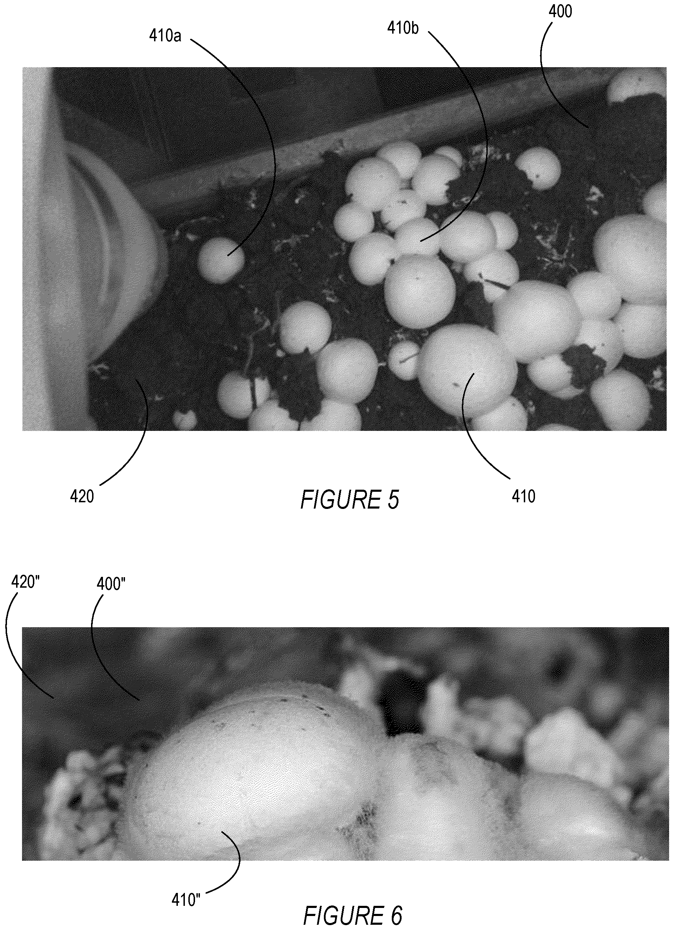

For example, with reference to FIG. 5, the mushroom bed 400 may be an actual mushroom bed 400 with live, growing mushrooms 410 in a real growth medium 420, and the known mushroom bed state vectors encoding the properties and characteristics of the mushroom bed 400 may be determined manually, which may be by manual inspection. Alternatively, and with reference to FIG. 6, the mushroom bed 400 may a synthetic mushroom bed 400", with synthetic mushrooms 410", and optionally synthetic growth medium 420", fabricated purposefully to possess preconfigured mushroom bed state vectors encoding a predetermined variety of the mushroom bed (including mushroom) properties and characteristics. In any case, the mushroom bed data vectors so received and generated may include or be labelled with the known mushroom bed state vectors. The mushroom bed model 260 may then process such labelled mushroom bed data vectors using the comparer 280 to determine differences between the known mushroom bed state vectors and the predicted mushroom bed state vectors generated by the mushroom bed model 260 based on the received mushroom bed data vectors, to learn to predict the corresponding known mushroom bed state vectors, and thus the known mushroom bed state.

The processor 210 may be operable to train the mushroom bed model 260 using any suitable techniques known in the art. A network architecture or topology may be established, and layers may be added which are associated with respective optimization functions, activation functions, and/or loss functions. One or more artificial neural networks may be used, and each may of any suitable type, including without limitation convolutional neural networks, recurrent neural networks, and deep learning neural networks. The mushroom bed model 260 may involve one artificial neural network, or may involve multiple different artificial neural networks. The mushroom bed model 260 may include instructions using supervised or unsupervised machine learning, involving identifying and recognizing patterns in the mushroom bed data (in the form of the mushroom bed data vectors) to enable recognition of mushroom bed states of the mushroom bed. The mushroom bed data and the differences between the actual and predicted mushroom bed state described herein which may be used to train the artificial neural network may be encoded in any suitable manner, such as, without limitation, an N-dimensional tensor, a matrix, or an array. Training may be performed in any suitable manner, and may include iterative training using labeled training data as described herein. Training of the artificial neural network may involve parameters initialized to random values, which are changed with each iteration, using any appropriate algorithm, such as a gradient descent algorithm, to converge to predetermined values. Training of the artificial neural network may employ any appropriate statistical model, which may be a multinomial logistic regression model, a random forest model, a decision tree, a logistic regression model, or a gradient boosting model.

As discussed above, it is often the case that following initial seeding or later reseeding, the developing mushrooms 410 in a bed 400 are not evenly distributed, but instead form in clumps or clusters, where some areas of the bed have a substantially higher density of mushrooms 410 compared to other areas of the bed. Reference in this regard is again made to FIG. 5, which shows an example of a first mushroom 410a which is substantially free from crowding by other mushrooms 410, and second mushrooms 410b (only one identified) which are crowded by neighbouring mushrooms. As discussed, such high density can negatively impact the growth and ultimate quality of at least some of the mushrooms, thereby decreasing productive yield.

Thus, as mentioned above, the processor 210 may further generate and operate a mushroom thinning model 270, and to perform the crop management program 232 based on at least partly on the mushroom thinning model 270. In particular, the processor 210 may perform the crop management program 232 including culling specific mushrooms 410 based on the output of the mushroom thinning model 270. In particular, the trained mushroom thinning model 270 may be operable to identify specific mushrooms 410 for culling in order to optimize productivity of the mushroom bed 400.

Specifically, the processor 210 may be operable to train the mushroom thinning model 270 by using a comparer 280. In an initial training stage, the trained mushroom bed model 260 may be used to generate mushroom bed state vectors based on mushroom bed data received as described herein, where the mushroom bed state vectors encode the properties and characteristics of the mushroom bed 400, including the mushrooms 410, and optionally the growth medium 420. For a given mushroom bed state, a known selection of mushrooms 410 to cull may be determined by an additional procedure to generate known culling selection vectors, and the mushroom thinning model 270 may be trained using the known culling selection vectors.

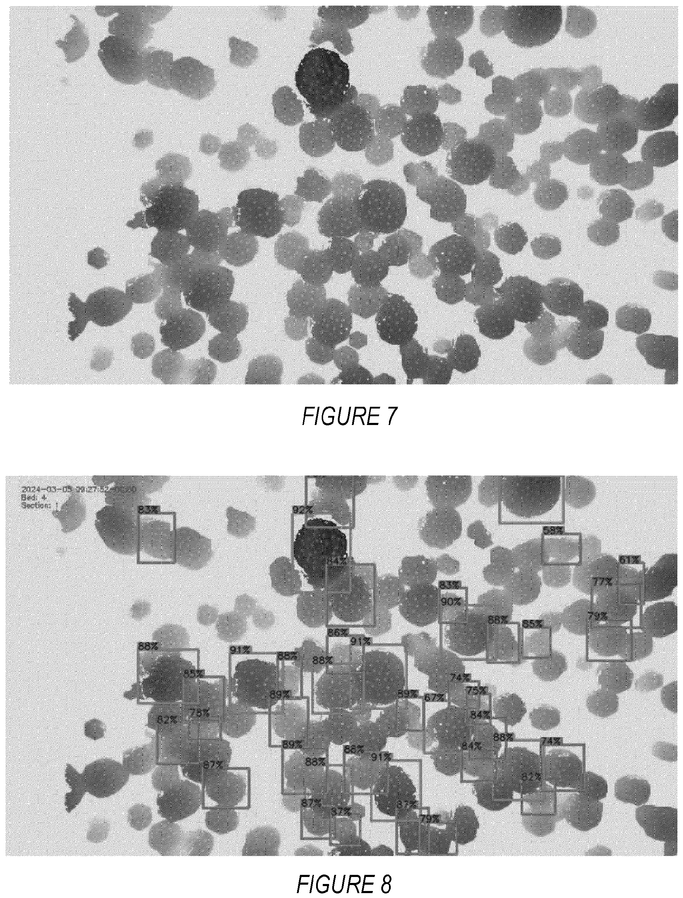

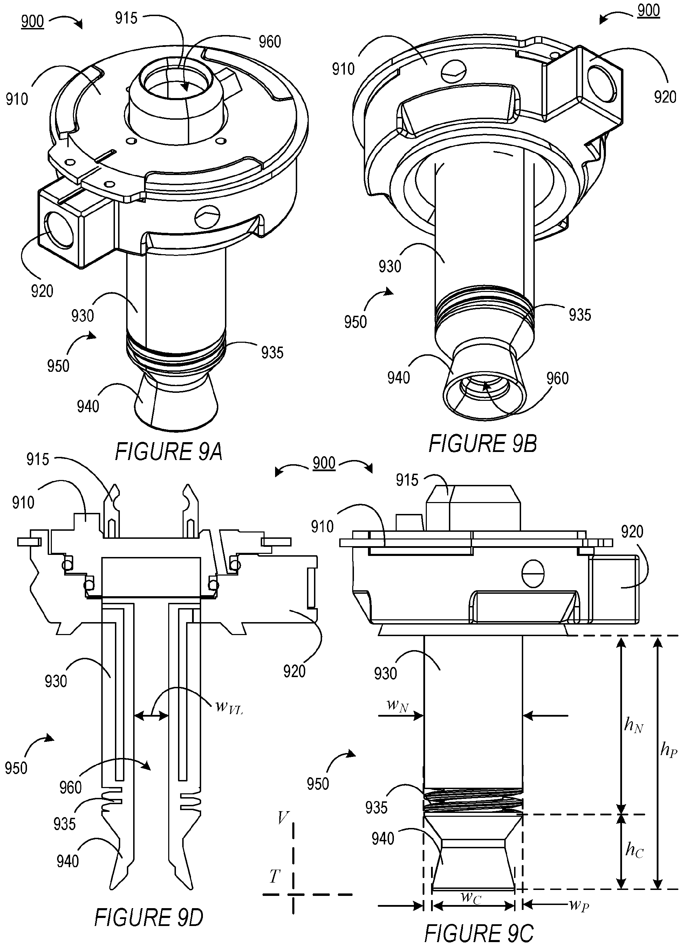

For example, with reference to FIG's 5 & 7, the mushroom bed 400 may be an actual mushroom bed 400 with live, growing mushrooms 410 in a real growth medium 420, and the known culling selection vectors may be determined manually, which may be by manual inspection. For example, one or more trained inspectors, which may be one or more humans, which may be one or more experienced mushroom farmers, may review a plurality of images of mushroom beds 400 including mushrooms 410, and manually identify specific mushrooms 410 for culling. The images may be of any appropriate type or form. For example, at least some images may be visible light spectrum images, such as the image shown in FIG. 5. Alternatively, or additionally, at least some images may be non-visible light spectrum images, such as the infrared spectrum image shown in FIG. 7. Other training set procedures are possible and contemplated. In any case, the mushroom bed state vectors received or generated may include or be labelled with the known culling selection vectors. The mushroom thinning model 270 may then process such labelled mushroom bed state vectors using the comparer 280 to determine differences between the known culling selection vectors and the predicted culling selection vectors generated by the mushroom thinning model 270 based on the received mushroom bed state vectors, to learn to predict the corresponding known culling selection vectors, and thus desired mushroom culling selections.

The processor 210 may be operable to train the mushroom thinning model 270 using any suitable techniques known in the art. A network architecture or topology may be established, and layers may be added which are associated with respective optimization functions, activation functions, and/or loss functions. One or more artificial neural networks may be used, and each may of any suitable type, including without limitation convolutional neural networks, recurrent neural networks, and deep learning neural networks. The mushroom thinning model 270 may involve one artificial neural network, or may involve multiple different artificial neural networks. The mushroom thinning model 270 may include instructions using supervised or unsupervised machine learning, involving identifying and recognizing patterns in the mushroom bed states (in the form of the mushroom bed state vectors) to enable recognition of desired mushroom culling selections. The mushroom bed states and the differences between the actual and predicted mushroom culling selections described herein which may be used to train the artificial neural network may be encoded in any suitable manner, such as, without limitation, an N-dimensional tensor, a matrix, or an array. Training may be performed in any suitable manner, and may include iterative training using labeled training data as described herein. Training of the artificial neural network may involve parameters initialized to random values, which are changed with each iteration, using any appropriate algorithm, such as a gradient descent algorithm, to converge to predetermined values. Training of the artificial neural network may employ any appropriate statistical model, which may be a multinomial logistic regression model, a random forest model, a decision tree, a logistic regression model, or a gradient boosting model.

In some embodiments, as described and shown above, the mushroom bed model 260 and the mushroom thinning model 270 are separate artificial neural networks, and are trained and function separately, in coordination, to provide the described functionality. In other embodiments, the mushroom bed model 260 and the mushroom thinning model 270 form parts or aspects of a single artificial neural network where, for example, the described functionality of the the mushroom bed model 260 is performed by a first set of layers of an architecture of the artificial neural network, and the described functionality of the mushroom thinning model 270 is performed by a second set of layers of an architecture of the artificial neural network. Different and further arrangements are possible and contemplated which provide the functionality and advantages described herein.

The trained mushroom thinning model 270 may thus be operable, as described above, to generate culling selection vectors based on received mushroom bed state vectors. An embodiment of culling selection vectors is illustrated in FIG. 8, which is the infrared spectrum image shown in FIG. 7 overlaid with bounding boxes associated with at least some of the mushrooms shown in the image, wherein the bounding boxes are marked with corresponding percentages and are rendered in different colours, wherein the colours indicate where a corresponding mushroom is likely to be a marketable mushroom (purple) or a non-marketable mushroom (red), and the percentages indicate a computed confidence level. The robotic mushroom crop manager controller 200 may be configured to use the crop management equipment 300 to cull a mushroom 410 whenever the mushroom thinning model 270 predicts that the mushroom 410 is likely to be a non-marketable mushroom at a confidence level which exceeds a preconfigured threshold.

In addition, or alternatively, the robotic mushroom crop manager controller 200 may be configured to use the crop management equipment 300 to cull a mushroom 410 whenever a stem-cap growth rate ratio - that is, a ratio of a rate of growth of the stem of the mushroom to a rate of growth of the cap of the mushroom - exceeds a preconfigured threshold. The formation of dense mushroom patches can result in the build-up of CO₂ beneath the surface. For reasons not fully understood, it sometimes occurs that the relative rate of stem growth of one or more mushrooms in such dense patches abruptly increases, which enables the mushroom cap to 'escape' the high subsurface CO₂ concentration, but results in mushrooms with smaller caps, and diversion of nutrients to stem growth. The overall result is a reduction in yield, quality, and value of the harvested mushrooms. In order to prevent such overgrowth of a mushroom bed, a flush can be picked more frequently, but picking at a higher frequency is difficult and costly to accomplish, especially with manual labour.

Thus, as described above, the mushroom bed data collector 224 may be operable by the processor 210 to collect using the sensors 320 a stream of mushroom bed data about the state and conditions of the mushroom bed 400 including the growing mushrooms 410 and optionally also the growing medium 420, and the mushroom bed model 260 may be operable to generate corresponding mushroom bed state vectors characterizing the mushroom bed 400 at specific corresponding times, which may encode properties or characteristics of the mushrooms 410 including without limitation: size, including any dimensions of the cap, including cap width, and any dimensions of the stem, including stem length; shape; density; defects; marks; quality grade; anomalies; surface texture; underside spacing between cap and growing medium; and stem orientation.

In particular, at least some of the sensors 320 may be configured for determination of stem length of mushrooms 410, or alternatively, or additionally, altitude of the mushroom cap above the growing medium 420. For example, as described above, at least some sensors 320 may be optical imagers 322 positioned, oriented, and configured in such a way as to provide an elevation, side, or perspective view of the growing mushrooms 410, and in particular of their stems, and likewise altitude of the mushroom cap relative to an upper surface of the growing medium 420. In some embodiments, such optimal imagers 322 may be or include the side imagers described above, operable to provide an elevation, side, or perspective view the portion of the end effector 350 and portion of the mushroom bed 400 beneath the end effector 350 when in use. In addition, and as described above, at least some of the optimal imagers 322 may be overhead imagers providing a plan or overhead view of a portion of the mushroom bed 400, and in particular enabling the collection of images showing the upper surfaces of the mushroom caps, enabling a view and measurement of the widths of the mushroom caps.

In some embodiments, the labelled mushroom bed state vectors used to train the mushroom thinning model 270 may include stem length and/or mushroom cap altitude, and mushroom cap width, as known characteristics of mushrooms 410, and thus the mushroom thinning model 270 may be trained to generate culling selection vectors based on received mushroom bed state vectors, and in particular received mushroom bed state vectors include stem length and/or mushroom cap altitude, and mushroom cap width, as characteristics of mushrooms 410. In this way, the mushroom thinning model 270 may be trained to predict mushroom culling selections, and the the processor 210 may be operable, in the performance of the crop management program 232, to cull a mushroom determined to have a stem-cap growth rate ratio which exceeds a preconfigured threshold.

Additionally, or alternatively, the memory 220 may further store a mushroom stem-cap growth rate ratio engine 290 operable by the processor 210 to identify mushrooms for culling based on a measured mushroom stem-cap growth rate ratio. The processor 210, in performing the crop management program 232, may be operable to store in the storage 230, which may be in a mushroom bed states 234 datastore, the mushroom bed state vectors generated by the mushroom bed model 260 based on mushroom bed data collected at a plurality of different times, the mushroom bed state vectors encoding stem length and/or mushroom cap altitude, and mushroom cap width, of at least some of the mushrooms 410. The processor 210 may then be operable, which may be by using mushroom stem-cap growth rate engine 290 stored in the memory 220, to monitor the mushroom stem-cap growth rate ratio of at least some of the mushrooms 410. In particular, the mushroom stem-cap growth rate engine 290 may be operable to compare the mushroom bed state vectors collected at a plurality of different times, and, for at least some of the mushrooms 410, determine a stem growth rate of the mushroom (or alternatively, a cap altitude growth rate), determine a cap width rate, compute a stem-cap growth rate ratio, and determine whether the computed stem-cap growth rate ratio exceeds a preconfigured threshold. When the stem-cap growth rate ratio exceeds the preconfigured threshold, the processor 210, in performing the crop management program 232, may be operable to use the crop management equipment 300 to cull the mushroom.

In either case, by culling mushrooms having a stem-cap growth rate ratio which exceeds a preconfigured threshold, and as such where the mushrooms are unlikely to be marketable, and which may impair the growth to marketable condition of neighbouring mushrooms, the robotic mushroom crop manager 100 may be further operable to optimize the total yield and overall effectiveness of automated mushroom cultivation.

As discussed and shown above, it is at least sometimes the case that the total yield of a mushroom flush may be optimized by culling certain specific mushrooms, and particularly in the case of mushroom clumps where the proximity and contact of neighbouring mushrooms impedes growth, which may occur in part through the build-up of CO₂ beneath the surface. It is at least sometimes desired, when culling a particular mushroom, to avoid, or at least reduce, contact with and potential damage, or actual damage, caused to mushrooms contacting or neighbour a mushroom to be culled, sometimes for the reason that such other mushrooms might promise to be marketable.

As indicated above, the robotic mushroom crop manager 100 may have or be operative to cooperate with a plurality of crop management tools 510 sized, shaped, and configured for coupling with and use by the robotic arm 330 end effector 350 to perform corresponding actions described herein. One or more such crop management tools 510 may be sized, shaped, and configured for culling mushrooms as described herein. For example, different crop management tools 510 may have different sizes or configurations suitable for the harvesting or culling of different sizes and/or types of mushrooms. Different crop management tools 510 may include, without limitation: suction cups with any suitable diameters, depths, dimensions, or configurations to accommodate any corresponding size, shape, or type of mushroom; grabbers with any number of fingers, such as 3, 4, 5, or 6, which may have knuckles or elbows; pipe-like tools with sharp, razor-like end to encircle a mushroom, which may be a mushroom pin, pass beyond it, and twist or otherwise disturb the substrate around it, in a circular manner; pipe-like tools with a moving section to close under a mushroom, which may be a mushroom pin, to lift it for transplantation, which may be in a circular manner; and pipe-like tools with an end flattened to press on a mushroom, which may be a mushroom pin, to be destroyed but left in place to rot. Other types and arrangements of tools are possible and contemplated.

In order to avoid, or at least to reduce, contact with and damage caused to such neighbourbouring mushrooms, the robotic mushroom crop manager 100 may be operable to use a particular crop management tool 510 specifically sized, shaped, and configured for culling of a selected mushroom 410 in a mushroom bed 400, while at the same time avoiding, or at least reducing, contact with and damage contact to neighbouring mushrooms.

One embodiment of such a crop management tool 510 may be end effector 900 shown in FIG's 9A-9D, which may be an instance of the end effector 350 described above. The end effector 900 may be or include a vacuum-type end effector substantially similar to the end effector disclosed in the applicant's WIPO International Publication Number WO 2023/010198 A1, with the following differences. The end effector 900 may have a head 910 with a vacuum port 915 for coupling with a vacuum source, and support coupler 920 for coupling to a structure for supporting and moving the end effector 900 over and about a mushroom bed 400, such as the robotic arm 330 described above. The end effector 900 may have a neck 930 below the head 910, and a cup 940 below the neck 930. The neck 930 and the cup 940 may be considered collectively to constitute a probe 950 of the end effector 900.

The neck 930 may have a neck height *h_{N}* and the cup 940 may have a cup height *h_{C}* each extending along a vertical axis *V of* the end effector 900. The neck height *h_{N}* and the cup height *h_{C}* may together equate to a probe height *h_{P}* of the proble 950. The neck 930 may have a neck width *w_{N}* and the cup 940 may have a cup width *w_{C}*, each along a transverse axis *T* of the end effector 900 perpendicular to the vertical axis *V.* the probe 950 may have a probe width *w_{P}*, which may equal whichever is the greater of the neck width *w_{N}* and the cup width *w_{C}*. The end effector 900 may also have a vacuum line 960 extending through the probe 950 and the head 910, which may have a vacuum line width *w_{VL}* extending along the transverse axis *T*.

The neck 930 may have a helical reinforcing element 935 operable for tilting of the cup 940 relative to the vertical axis V to enable access by the cup 940 to angle surfaces of the mushroom bed to facilitate the harvesting or culling of mushrooms. The helical reinforicing element 935 may comprise a helical ridge integrally formed on an external surface of the neck 930. In other embodiments, the helical reinforcing element 935 may comprise a metallic wire or spring adhered to coupled to the neck 930 or incorporated in a material of the neck 930. The helical reinforcing element 935 may provide rigidity to the neck 930 when a twisting motion is applied to the end effector 900 about the vertical axis V.

The cup 940 may be formed of a soft, flexible material, such as a silicon rubber, having a low shore durometer value and a high elasticity, so as to facilitate the cup passively conforming to the surface of a mushroom cap as the cup 940 is brought into contact with the mushroom. The neck 930 may be formed of a resilient material such as silicon rubber having a higher shore durometer value and lower elasticity as compared to the cup 940. The resiliency of the neck 930 and the helical reinforicing element 935 may enable or facilitate rebounding of the cup 940 to an aligned orientation with the next 930 along the vertical axis V after successfully grasping a mushroom.

The end effector 900 may be sized, shaped to avoid or at least reduce contact with and damage caused to neighbourbouring mushrooms when used to cull non-marketable mushrooms. In particular, as compared to conventional end effectors, including disclosed in the applicant's WIPO International Publication Number WO 2023/010198 A1, the end effector 900 may have a probe 950 which is comparatively longer and narrower to enable or to facilitate selective insertion and movement - or probing - of the cup 940 amongst and past neighbouring mushrooms while avoiding or minimizing contact with them, in order to access a mushroom for culling.

To this end, in different embodiments, the neck height *h_{N}* may be at least about 40 mm, or from about 40 mm to about 60 mm, or about 50 mm. In different embodiments, the cup height *h_{C}* may be at least about 15 mm, or from about 15 mm to about 25 mm, or about 20 mm. Thus, in different embodiments, the probe height *h_{P}* may be at least about 55 mm, or from about 55 mm to about 85 mm, or about 70 mm. In different embodiments, the neck width *w_{N}* may be at most about 30 mm, or from about 20 mm to about 30 mm, or about 25 mm. In different embodiments, the cup width *w_{C}* may be at most about 30 mm, or from about 20 mm to about 30 mm, or about 25 mm. Thus, in different embodiments, the probe width *w_{P}* may be at most about 30 mm, or from about 20 mm to about 30 mm, or about 25 mm. As such, in different embodiments, a probe height-width ratio of the probe height *h_{P}* to the probe width *w_{P}* may be at least about 1.5:1, or from about 1.5:1 to about 4.5:1, or about 3:1.

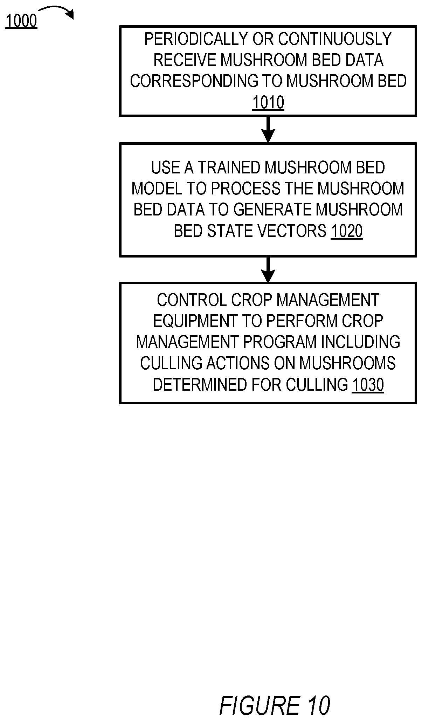

Thus, in accordance with the foregoing, a method 1000 performable by the robotic mushroom crop manager 100 is shown in FIG. 10. The robotic mushroom crop manager 100 may periodically or continuously receive mushroom bed data corresponding to a mushroom bed including growing mushrooms at a plurality of times (step 1010). The robotic mushroom crop manager 100 may use a trained mushroom bed model to process the mushroom bed data to generate mushroom bed state vectors respectively characterizing corresponding states of the mushroom bed at the plurality of times (step 1020). The robotic mushroom crop manager 100 may control crop management equipment to perform a crop management program comprising a sequence of actions on the mushroom bed, the sequence of actions including culling actions on at least some of mushrooms determined for culling based on the mushroom bed state vectors (step 1030).

In this way, the automated mushroom crop manager 100 may be operable to train a mushroom thinning model 260 to determine mushrooms for culling, including when a stem-cap growth rate ratio of the mushrooms exceeds a preconfigured threshold. An end effector 900 having a probe 950 which is long and narrow for avoiding and reducing contact to neighbour mushrooms may be used to cull mushrooms determined to be culled. In this way, the automated mushroom crop manager 100 may be operable to perform a crop management program which maximizes the yield of marketable mushrooms.

The robotic mushroom crop manager controller 200 may include any computing and related communications and interface technology useful to perform the functions described herein. Such technology may include one or more computers, one or more servers, a group or groups of multiple servers, or one or mobile computing devices. Each of these may include or use further processing or communications technologies, which may include any number of processors and processor types, such as CPUs, one or more graphics processing units (GPUs), digital signal processors (DSPs), and so forth. In general, each such processor (including processor 210) is operable to execute or perform instructions stored in a memory, including memory 220, respectively. Such memory may include or interface persistent memories, such as storage 230. Each such processor may use any communications technology, including communications interface 240, which may include network interface controllers (NICs), which may be wired or wireless controllers, operable to perform communication over a network, which may be or include the Internet. The robotic mushroom crop manager controller 200 may include or be implemented in part or in whole in a cloud computing environment, including without limitation Amazon AWS^{™} or Microsoft Azure^{™}.

The following are non-limiting embodiments of the disclosed subject-matter.

Embodiment 1. A robotic mushroom crop manager comprising: at least one processor; a communications interface; and at least one computer-readable medium storing instructions executable by the at least one processor to cause the robotic mushroom crop manager: to periodically or continuously receive mushroom bed data corresponding to a mushroom bed including growing mushrooms at a plurality of times; to use a trained mushroom bed model to process the mushroom bed data to generate mushroom bed state vectors respectively characterizing corresponding states of the mushroom bed at the plurality of times; and to control crop management equipment to perform a crop management program comprising a sequence of actions on the mushroom bed, the sequence of actions including culling actions on at least some of mushrooms determined for culling based on the mushroom bed state vectors.

Embodiment 2. The robotic mushroom crop manager of Embodiment 1, comprising: a controller comprising: the at least one processor; the communications interface; and the at least one computer-readable medium; and the crop management device comprising: a crop management device operable to perform the sequence of actions on the mushroom bed; and sensors operable to collect the mushroom bed data, the sensors comprising at least one optical imager operable to collect images of the mushroom bed, wherein the mushroom bed data comprises the images.

Embodiment 3. The robotic mushroom crop manager of Embodiment 2, wherein: the crop management device comprises a robotic arm comprising an end effector operable to perform the culling actions; the at least one optical imager comprises: an overhead imager mounted at an underside of the robotic arm proximal the end effector and operable to collect overhead imager images of a plan or overhead view of the mushroom bed beneath the end effector; and the images comprise the overhead imager images.

Embodiment 4. The robotic mushroom crop manager of Embodiment 3, wherein: the mushroom bed state vectors comprise a mushroom cap width.

Embodiment 5. The robotic mushroom crop manager of Embodiment 4, wherein: the at least one optical imager further comprises: a side imager mounted at or proximal the robotic arm and oriented and operable to collect side imager images of an elevation, side, or perspective view of the end effector and the mushroom bed adjacent the end effector; and the images further comprise the side imager images.

Embodiment 6. The robotic mushroom crop manager of Embodiment 5, wherein: the mushroom bed state vectors comprise a mushroom cap height.

Embodiment 7. The robotic mushroom crop manager of Embodiment 6, wherein the instructions are executable by the at least one processor to cause the robotic mushroom crop manager: to determine at least for the mushrooms for culling a stem-cap growth rate ratio of a rate of growth of a stem of the mushroom to a rate of growth of the cap of the mushroom based on the mushroom cap height and the mushroom cap width; and to determine for the mushrooms for culling that the stem-cap growth rate ratio exceeds a preconfigured threshold.

Embodiment 8. The robotic mushroom crop manager of any one of Embodiments 2 to 6, wherein the instructions are executable by the at least one processor to cause the robotic mushroom crop manager: to use a trained mushroom thinning model to determine mushrooms for culling based on the mushroom bed state vectors.

Embodiment 9. The robotic mushroom crop manager of Embodiment 8, wherein: the trained mushroom thinning model is trained to determine mushrooms for culling having a stem-cap growth rate ratio of a rate of growth of a stem of the mushroom to a rate of growth of the cap of the mushroom that exceeds a preconfigured threshold.

Embodiment 10. The robotic mushroom crop manager of any one of Embodiments 2 to 9, wherein: the crop management device is operable to perform the culling actions using a robotic end effector comprising: a head operable for coupling to a source of vacuum and a robotic arm; and a probe extending vertically from the head; wherein: the probe comprises a neck extending vertically from the head and a cup extending vertically from the neck; the head and the probe define a vacuum line channel extending vertically through the head and the probe; the probe has a probe width and a probe height; and a probe height-width ratio of the probe height to the probe width is at least about 1.5:1.

Embodiment 11. The robotic mushroom crop manager of Embodiment 10, wherein: the probe height-width ratio is from about 1.5:1 to about 4.5:1.

Embodiment 12. The robotic mushroom crop manager of Embodiment 10, wherein: the probe height-width ratio is about 3:1.

Embodiment 13. An end effector for a robotic mushroom crop manager, the end effector comprising: a head operable for coupling to a source of vacuum and a robotic arm; and a probe extending vertically from the head; wherein: the probe comprises a neck extending vertically from the head and a cup extending vertically from the neck; the head and the probe define a vacuum line channel extending vertically through the head and the probe; the probe has a probe width and a probe height; and a probe height-width ratio of the probe height to the probe width is at least about 1.5:1.

Embodiment 14. The robotic mushroom crop manager of Embodiment 13, wherein: the probe height-width ratio is from about 1.5:1 to about 4.5:1.

Embodiment 15. The robotic mushroom crop manager of Embodiment 13, wherein: the probe height-width ratio is about 3:1.

Embodiment 16. A method performed by at least one processor of a robotic mushroom crop manager, the robotic mushroom crop manager comprising a communications interface, the method comprising: periodically or continuously receiving mushroom bed data corresponding to a mushroom bed including growing mushrooms at a plurality of times; using a trained mushroom bed model to process the mushroom bed data to generate mushroom bed state vectors respectively characterizing corresponding states of the mushroom bed at the plurality of times; and controlling crop management equipment to perform a crop management program comprising a sequence of actions on the mushroom bed, the sequence of actions including culling actions on at least some of mushrooms determined for culling based on the mushroom bed state vectors.

Embodiment 17. The method of Embodiment 16, wherein: periodically or continuously receiving the mushroom bed data comprises using sensors to collect the mushroom bed data, the sensors comprising at least one optical imager operable to collect images of the mushroom bed; the mushroom bed data comprises the images; and the crop management device comprises a crop management device operable to perform the sequence of actions on the mushroom bed.

Embodiment 18. The method of Embodiment 17, wherein: the crop management device comprises a robotic arm comprising an end effector operable to perform the culling actions; the at least one optical imager comprises: an overhead imager mounted at an underside of the robotic arm proximal the end effector and operable to collect overhead imager images of a plan or overhead view of the mushroom bed beneath the end effector; and the images comprise the overhead imager images.

Embodiment 19. The method of Embodiment 18, wherein: the mushroom bed state vectors comprise a mushroom cap width.

Embodiment 20. The method of Embodiment 19, wherein: the at least one optical imager further comprises: a side imager mounted at or proximal the robotic arm and oriented and operable to collect side imager images of an elevation, side, or perspective view of the end effector and the mushroom bed adjacent the end effector; and the images further comprise the side imager images.

Embodiment 21. The method of Embodiment 20, wherein: the mushroom bed state vectors comprise a mushroom cap height.

Embodiment 22. The method of Embodiment 21, further comprising: determining at least for the mushrooms for culling a stem-cap growth rate ratio of a rate of growth of a stem of the mushroom to a rate of growth of the cap of the mushroom based on the mushroom cap height and the mushroom cap width; and determining for the mushrooms for culling that the stem-cap growth rate ratio exceeds a preconfigured threshold.

Embodiment 23. The method of any one of Embodiments 17 to 21, further comprising: using a trained mushroom thinning model to determine mushrooms for culling based on the mushroom bed state vectors.

Embodiment 24. The method of Embodiment 23, wherein: the trained mushroom thinning model is trained to determine mushrooms for culling having a stem-cap growth rate ratio of a rate of growth of a stem of the mushroom to a rate of growth of the cap of the mushroom that exceeds a preconfigured threshold.

Embodiment 25. The method of any one of Embodiments 17 to 24, comprising: using a robotic end effector to perform the culling actions, the end effector comprising: a head operable for coupling to a source of vacuum and a robotic arm; and a probe extending vertically from the head; wherein: the probe comprises a neck extending vertically from the head and a cup extending vertically from the neck; the head and the probe define a vacuum line channel extending vertically through the head and the probe; the probe has a probe width and a probe height; and a probe height-width ratio of the probe height to the probe width is at least about 1.5:1.

Embodiment 26. The method of Embodiment 25, wherein: the probe height-width ratio is from about 1.5:1 to about 4.5:1.

Embodiment 27. The method of Embodiment 26, wherein: the probe height-width ratio is about 3:1.

Embodiment 28. A computer-readable medium storing instructions executable by the at least one processor to perform the method of any one of Embodiments 16 to 27.

So that the present disclosure may be more readily understood, certain terms are defined. Unless defined otherwise, all technical and scientific terms used herein have the same meaning as commonly understood by one of ordinary skill in the art to which embodiments of the invention pertain. While many methods and materials similar, modified, or equivalent to those described herein can be used in the practice of the embodiments of the present invention without undue experimentation, the preferred materials and methods are described herein.

All terminology used herein is for the purpose of describing particular embodiments only, and is not intended to be limiting in any manner or scope. For example, as used in this specification and the appended claims, the singular forms "a," "an" and "the" can include plural referents unless the content clearly indicates otherwise.

Numeric ranges recited within the specification are inclusive of the numbers defining the range and include each integer within the defined range. Throughout this disclosure, various aspects of this invention are presented in a range format. It should be understood that the description in range format is merely for convenience and brevity and should not be construed as an inflexible limitation on the scope of the invention. Accordingly, the description of a range should be considered to have specifically disclosed all the possible sub-ranges, fractions, and individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6, etc., as well as individual numbers within that range, for example, 1, 2, 3, 4, 5, and 6, and decimals and fractions, for example, 1.2, 3.8, 1½, and 4¾. This applies regardless of the breadth of the range.

The terms "about" or "approximately" as used herein refer to variation in the numerical quantity that can occur, for example, through typical measuring techniques and equipment, with respect to any quantifiable variable, including, but not limited to, mass, volume, time, distance, voltage, and current. Further, given solid and liquid handling procedures used in the real world, there is certain inadvertent error and variation that is likely through differences in the manufacture, source, or purity of the ingredients used to make the compositions or carry out the methods and the like. The terms "about" and "approximately" also encompass these variations. Expressions which combine the terms "about" or "approximately" with one or more bounds of a range refer to a union of the bound modified by the term "about" or "approximately" as described above, and the range having the unmodified bound. Thus, for example, the expression "at least about X" means the union of "at least X" and "about X". Similarly, "at most about Y" means the union of "at most Y" and "about Y".

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of", or when used in the claims, "consisting of' will refer to the inclusion of exactly one element of a number or list of elements. In general, the term "or" as used herein shall only be interpreted as indicating exclusive alternatives (i.e. "one or the other but not both") when preceded by terms of exclusivity, such as "either", "one of", "only one of", or "exactly one of". "Consisting essentially of", when used in the claims, shall have its ordinary meaning as used in the field of patent law.

Embodiments of the disclosed subject-matter are described herein using the auxiliary verb "may". When used herein, unless required otherwise by the context of usage, the auxiliary verb "may" designates an embodiment of the disclosed subject-matter which possesses the addressed object without requiring necessarily that any other embodiment of the disclosed subject-matter possesses the addressed object. Thus, a statement such as "X may include Y" indicates that the disclosed subject-matter includes embodiments where X includes Y, without requiring that all disclosed embodiments include Y, and without excluding any other embodiments which do not include Y.

While the disclosed subject-matter may be embodied in many different forms, there are described in detail herein specific embodiments. The present disclosure is an exemplification of the principles of the disclosed subject-matter and is not intended to limit the disclosed subject-matter to the particular embodiments illustrated. Furthermore, the disclosed subject-matter encompasses any possible combination of some or all of the various embodiments mentioned herein. In addition the disclosed subject-matter encompasses any possible combination that also specifically excludes any one or some of the various embodiments mentioned herein.

In some instances, well-known hardware and software components, modules, and functions are shown in block diagram form in order not to obscure the invention. For example, specific details are not provided as to whether the embodiments described herein are implemented as a software routine, hardware circuit, firmware, or a combination thereof.

Some of the embodiments described herein include a processor and a memory storing computer-readable instructions executable by the processor. In some embodiments, the processor is a hardware processor configured to perform a predefined set of basic operations in response to receiving a corresponding basic instruction selected from a predefined native instruction set of codes. Each of the modules defined herein may include a corresponding set of machine codes selected from the native instruction set, and which may be stored in the memory.

Embodiments can be implemented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, optical disc, memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described embodiments can also be stored on the machine-readable medium. Software running from the machine-readable medium can interface with circuitry to perform the described tasks.

In the preceding description, for purposes of explanation, numerous details are set forth in order to provide a thorough understanding of the embodiments. However, it will be apparent to one skilled in the art that these specific details are not required. In particular, it will be appreciated that the various additional features shown in the drawings are generally optional unless specifically identified herein as required. The above-described embodiments are intended to be examples only. Alterations, modifications and variations can be effected to the particular embodiments by those of skill in the art. The scope of the claims should not be limited by the particular embodiments set forth herein, but should be construed in a manner consistent with the specification as a whole.

## Claims

1. A robotic mushroom crop manager comprising:
at least one processor;
a communications interface; and
at least one computer-readable medium storing instructions executable by the at least one processor to cause the robotic mushroom crop manager:
to periodically or continuously receive mushroom bed data corresponding to a mushroom bed including growing mushrooms at a plurality of times;
to use a trained mushroom bed model to process the mushroom bed data to generate mushroom bed state vectors respectively characterizing corresponding states of the mushroom bed at the plurality of times; and
to control crop management equipment to perform a crop management program comprising a sequence of actions on the mushroom bed, the sequence of actions including culling actions on at least some of mushrooms determined for culling based on the mushroom bed state vectors.

2. The robotic mushroom crop manager of claim 1, comprising:
a controller comprising:
the at least one processor;
the communications interface; and
the at least one computer-readable medium; and
the crop management device comprising:
a crop management device operable to perform the sequence of actions on the mushroom bed; and
sensors operable to collect the mushroom bed data, the sensors comprising at least one optical imager operable to collect images of the mushroom bed, wherein the mushroom bed data comprises the images.

3. The robotic mushroom crop manager of claim 2, wherein:
the crop management device comprises a robotic arm comprising an end effector operable to perform the culling actions;
the at least one optical imager comprises:
an overhead imager mounted at an underside of the robotic arm proximal the end effector and operable to collect overhead imager images of a plan or overhead view of the mushroom bed beneath the end effector; and
the images comprise the overhead imager images.

4. The robotic mushroom crop manager of claim 3, wherein:
the mushroom bed state vectors comprise a mushroom cap width.

5. The robotic mushroom crop manager of claim 4, wherein:
the at least one optical imager further comprises:
a side imager mounted at or proximal the robotic arm and oriented and operable to collect side imager images of an elevation, side, or perspective view of the end effector and the mushroom bed adjacent the end effector; and
the images further comprise the side imager images.

6. The robotic mushroom crop manager of claim 5, wherein:
the mushroom bed state vectors comprise a mushroom cap height.

7. The robotic mushroom crop manager of claim 6, wherein the instructions are executable by the at least one processor to cause the robotic mushroom crop manager:
to determine at least for the mushrooms for culling a stem-cap growth rate ratio of a rate of growth of a stem of the mushroom to a rate of growth of the cap of the mushroom based on the mushroom cap height and the mushroom cap width; and
to determine for the mushrooms for culling that the stem-cap growth rate ratio exceeds a preconfigured threshold.

8. The robotic mushroom crop manager of any one of claims 2 to 6, wherein the instructions are executable by the at least one processor to cause the robotic mushroom crop manager:
to use a trained mushroom thinning model to determine mushrooms for culling based on the mushroom bed state vectors.

9. The robotic mushroom crop manager of claim 8, wherein:
the trained mushroom thinning model is trained to determine mushrooms for culling having a stem-cap growth rate ratio of a rate of growth of a stem of the mushroom to a rate of growth of the cap of the mushroom that exceeds a preconfigured threshold.

10. The robotic mushroom crop manager of any one of claims 2 to 9, wherein:
the crop management device is operable to perform the culling actions using a robotic end effector comprising:
a head operable for coupling to a source of vacuum and a robotic arm; and
a probe extending vertically from the head;
wherein:
the probe comprises a neck extending vertically from the head and a cup extending vertically from the neck;
the head and the probe define a vacuum line channel extending vertically through the head and the probe;
the probe has a probe width and a probe height; and
a probe height-width ratio of the probe height to the probe width is at least about 1.5:1.

11. The robotic mushroom crop manager of claim 10, wherein:
the probe height-width ratio is from about 1.5:1 to about 4.5:1,
or about 3:1.

12. A method performed by at least one processor of a robotic mushroom crop manager, the robotic mushroom crop manager comprising a communications interface, the method comprising:
periodically or continuously receiving mushroom bed data corresponding to a mushroom bed including growing mushrooms at a plurality of times;
using a trained mushroom bed model to process the mushroom bed data to generate mushroom bed state vectors respectively characterizing corresponding states of the mushroom bed at the plurality of times; and
controlling crop management equipment to perform a crop management program comprising a sequence of actions on the mushroom bed, the sequence of actions including culling actions on at least some of mushrooms determined for culling based on the mushroom bed state vectors.

13. The method of claim 12, wherein:
periodically or continuously receiving the mushroom bed data comprises using sensors to collect the mushroom bed data, the sensors comprising at least one optical imager operable to collect images of the mushroom bed;
the mushroom bed data comprises the images; and
the crop management device comprises a crop management device operable to perform the sequence of actions on the mushroom bed;
optionally wherein:
the crop management device comprises a robotic arm comprising an end effector operable to perform the culling actions;
the at least one optical imager comprises:
an overhead imager mounted at an underside of the robotic arm proximal the end effector and operable to collect overhead imager images of a plan or overhead view of the mushroom bed beneath the end effector; and
the images comprise the overhead imager images; optionally wherein:
the mushroom bed state vectors comprise a mushroom cap width; optionally wherein:
the at least one optical imager further comprises: a side imager mounted at or proximal the robotic arm and oriented and operable to collect side imager images of an elevation, side, or perspective view of the end effector and the mushroom bed adjacent the end effector; and
the images further comprise the side imager images; optionally wherein:
the mushroom bed state vectors comprise a mushroom cap height; optionally wherein the method further comprises:
determining at least for the mushrooms for culling a stem-cap growth rate ratio of a rate of growth of a stem of the mushroom to a rate of growth of the cap of the mushroom based on the mushroom cap height and the mushroom cap width; and
determining for the mushrooms for culling that the stem-cap growth rate ratio exceeds a preconfigured threshold;
optionally wherein the method further comprises:
using a trained mushroom thinning model to determine mushrooms for culling based on the mushroom bed state vectors;
optionally wherein:
the trained mushroom thinning model is trained to determine mushrooms for culling having a stem-cap growth rate ratio of a rate of growth of a stem of the mushroom to a rate of growth of the cap of the mushroom that exceeds a preconfigured threshold;

14. The method of claim 13, comprising:
using a robotic end effector to perform the culling actions, the end effector comprising:
a head operable for coupling to a source of vacuum and a robotic arm; and
a probe extending vertically from the head;
wherein:
the probe comprises a neck extending vertically from the head and a cup extending vertically from the neck;
the head and the probe define a vacuum line channel extending vertically through the head and the probe; the probe has a probe width and a probe height; and
a probe height-width ratio of the probe height to the probe width is at least about 1.5:1.

15. The method of claim 14, wherein:
the probe height-width ratio is from about 1.5:1 to about 4.5:1, or about 3:1.
